# EUROPÄISCHE PATENTSCHRIFT

(11) **EP 3 977 644 B1**
(45) Veröffentlichungstag und Bekanntmachung des Hinweises auf die Patenterteilung: **04.12.2024**
(21) Anmeldenummer: 20729626.0
(22) Anmeldetag: 26.05.2020
(51) Int. Cl.: G02B 5/10, G02B 19/00, H04B 10/80, H04B 10/114

(54) **SYSTEM, INSBESONDERE ANLAGE, MIT EINEM MOBILTEIL UND EINEM EINEN SCHIRM AUFNEHMENDEN AUFNAHMETEIL**
SYSTEM, IN PARTICULAR INSTALLATION, HAVING A MOBILE PART AND A HOLDING PART, WHICH HOLDS A SCREEN
SYSTÈME, NOTAMMENT INSTALLATION, COMPORTANT UNE PARTIE MOBILE ET UNE PARTIE DE RÉCEPTION RECEVANT UN ÉCRAN

(30) Priorität: 29.05.2019 DE 102019003763
(43) Veröffentlichungstag der Anmeldung: 06.04.2022
(73) Patentinhaber: SEW-EURODRIVE GmbH & Co. KG, 76646 Bruchsal (DE)
(72) Erfinder: LINDENFELSER, Michael, 76646 Bruchsal (DE); WANJEK, Andreas, 68753 Waghäusel (DE); HUA, Zhidong, 76646 Bruchsal (DE); SCHÄFER, Thomas, 76689 Karlsdorf-Neuthard (DE)
(86) Internationale Anmeldenummer: PCT/EP2020/025245
(87) Internationale Veröffentlichungsnummer: WO 2020/239263

(56) Entgegenhaltungen:
- EP-A1- 1 858 179
- DE-A1- 102012 002 718
- US-A- 5 073 979
- US-A- 6 061 160

## Beschreibung

Die Erfindung betrifft ein System, insbesondere Anlage, mit einem Mobilteil und einem einen Schirm aufnehmenden Aufnahmeteil.

Es ist allgemein bekannt, dass Mobilteile auf einer Verfahrfläche verfahrbar sind.

**Aus der** US 4 796 183 **ist eine Datenübertragung zu einem drehbar angeordneten Teil bekannt.**

**Aus der** DE 20 2016 104 836 A1 **ist eine Schleifleitung bekannt.**

**Aus der** DE 30 19 132 A1 **ist eine Vorrichtung zur Übertragung elektrischer Signale zwischen zwei relativ zueinander bewegbaren Teilen bekannt.**

**Aus der** US 5 073 979 A **ist als nächstliegender Stand der Technik ein Reflektor für einen Infrarotsender einer Fernbedienung bekannt.**

**Aus der** US 6 061 160 A **ist eine Anordnung für optische Kommunikation bekannt.**

**Aus der** DE 10 2012 002718 A1 **ist eine Anordnung zur Datenübertragung zwischen einem ersten Anlagenteil und einem relativ zum ersten Anlagenteil verfahrbaren Mobilteil bekannt.**

**Aus der** EP 1 858 179 A1 **ist eine Anordnung zur Kommunikation mittels Beleuchtungslicht bekannt.**

Der Erfindung liegt daher die Aufgabe zugrunde, ein System mit Mobilteilen bezüglich Datenübertragung weiterzubilden.

Erfindungsgemäß wird die Aufgabe bei dem System nach den in Anspruch 1 angegebenen Merkmalen gelöst.

Wichtige Merkmale bei dem System, insbesondere Anlage, mit einem Mobilteil und einem einen Schirm aufnehmenden Aufnahmeteil, an welchem ein Sender befestigt ist, sind, dass das Aufnahmeteil einen Schlitz, insbesondere Öffnung, aufweist,
wobei das Mobilteil einen Empfänger aufweist,
insbesondere wobei das Mobilteil dem Schlitz entlang bewegbar ist, so dass der Empfänger während der Bewegung einen konstanten Abstand zum Schlitz aufweist.

Von Vorteil ist dabei, dass der Sender Licht in einen im Aufnahmeteil ausgebildeten Hohlraum einstrahlt, das durch den Schlitz austritt und von dem Empfänger detektiert wird. Durch Modulation des abgestrahlten Lichts sind somit Daten übertragbar vom Sender zum Empfänger, also vom stationären Teil einer Anlage zum auf einer Verfahrfläche der Anlage bewegbaren Mobilteil. Der Hohlraum ist dabei vorzugsweise derart geformt, dass das vom Sender eingestrahlte Licht entlang des Schlitzes möglichst gleichmäßig abgestrahlt wird. Hierzu ist im Hohlraum des Aufnahmeteils ein Schirm angeordnet, welcher das Licht streut, so dass entweder nach Streuung oder nach ein- oder mehrfacher Streuung und Reflexion Licht aus dem Schlitz in die Umgebung austritt, welches dann vom Empfänger detektierbar ist. Durch geeignete Formung des Schirmes ist die Lichtstärke entlang des Schlitzes möglichst konstant oder nur geringfügig veränderlich.

Somit ist auch in Funklöchern oder in unübersichtlichen Anlagen mit vielen großen metallischen Gegenständen ein Datenaustausch zu einem Mobilteil hin ermöglicht oder zumindest eine unidirektionale Datenübertragung von einem stationären Sender zu einem Empfänger des Mobilteils ermöglicht. Auf diese Weise sind aktualisierte intralogistische Fahraufträge für das jeweilige Mobilteil übermittelbar, ohne dass eine ständige Funkverbindung oder dergleichen notwendig ist. Die Erfindung ist sehr kostengünstig ausführbar, wenn das Mobilteil mittels einer Spurführungsantenne des Mobilteils entlang einer an der Verfahrfläche verlegten Spurführung, insbesondere mit Wechselstrom beaufschlagter Linienleiter, geführt wird und in einem Bereich der vom Mobilteil durchfahrenen Bahn das erfindungsgemäße Aufnahmeteil derart verlegt ist, dass der Schlitz parallel zur Bahn des Mobilteils ausgerichtet ist, so dass das Mobilteil während der Fahrt optisch Daten übertragen bekommt. Besonders vorteilhaft sind solche Aufnahmeteile vor einer Kreuzung oder in einem sonstigen Wartebereich installiert.

Alternativ sind die Aufnahmeteile auch parallel zu einer Schiene anordenbar, wobei die Mobilteile dann als entlang der Schiene verfahrbare Schienenfahrzeuge ausgeführt sind.

Bei einer vorteilhaften Ausgestaltung strahlt der Sender gemäß einem digitalen Datenstrom moduliertes Licht, insbesondere sichtbares Licht oder Infrarot-Licht, ab, insbesondere wobei der Empfänger aus dem modulierten Licht den Datenstrom demoduliert. Von Vorteil ist dabei, dass Daten auf einfache Weise übertragbar sind. Insbesondere ist eine Modulation des gesendeten Lichts bei Verwendung eines Lasers oder einer LED als Sender einfach ausführbar. Ebenso ist als Empfänger eine Photodiode oder ein Phototransistor verwendbar, der für das vom Sender ausgestrahlte Licht empfindlich ist.

Bei einer vorteilhaften Ausgestaltung streut der Schirm das vom Sender abgestrahlte Licht. Von Vorteil ist dabei, dass das vom Sender abgestrahlte Licht mit einem Einfallswinkel zwischen 0° und 90° auf den Schirm gerichtet ist und das vom Schirm gestreute Licht entweder durch den Schlitz in die Umgebung, insbesondere zum Empfänger, abgestrahlt wird oder zu einer verspiegelten Seitenfläche des Aufnahmeteils, so dass ein oder mehrfach reflektiertes und/oder gestreutes Licht durch den Schlitz abgestrahlt wird.

Bei einer vorteilhaften Ausgestaltung ist der Schirm derart gebogen ausgeführt, dass der Abstand zwischen dem Schirm und dem Schlitz mit zunehmendem Abstand vom Sender monoton, insbesondere streng monoton, abnimmt. Von Vorteil ist dabei, dass der Schirm bei zunehmender Entfernung vom Sender das vom Sender kommende Licht mit einem kleineren gegen das Lot, also die Normale einer jeweiligen lokalen Tangentialfläche, Einfallswinkel einfällt und somit mehr Licht des vom Sender austretenden Lichtstroms gestreut wird. Die Biegung des Schirms ist dabei abhängig von der Entfernung zum Sender, welcher in einem Abstand zum Schirm angeordnet ist und in einer Wand des Aufnahmeteils aufgenommen und gehalten ist.

Bei einer vorteilhaften Ausgestaltung ist der Schirm in einem Hohlraum des Aufnahmeteils aufgenommen, wobei der Hohlraum am Schlitz, insbesondere an der Öffnung, in die Umgebung mündet. Von Vorteil ist dabei, dass der Schirm beabstandet zum Schlitz im Aufnahmeteil angeordnet ist, aber der Abstand des Schirms zum Schlitz mit zunehmendem Abstand zum Sender abnimmt.

Bei einer vorteilhaften Ausgestaltung sind den Hohlraum berandende Flächen des Aufnahmeteils als Spiegelflächen ausgeführt, insbesondere mit einer Beschichtung versehen sind, die einen Reflexionsgrad von mehr als 60% aufweisen. Von Vorteil ist dabei, dass Licht, welches nicht direkt durch den Schlitz in die Umgebung austritt reflektiert wird und das ein- oder mehrfach reflektierte Licht dann durch den Schlitz austritt oder nach Streuung mittels des Schirms austritt. Der Schirm ist vorzugsweise nicht transparent für das Licht, sondern streut das Licht.

Bei einer vorteilhaften Ausgestaltung ist insbesondere quer zur Erstreckungsrichtung des Schlitzes, die Breite des Schlitzes kleiner als die lichte Weite des Hohlraums. Von Vorteil ist dabei, dass der Schlitz enger ist als der Hohlraum und somit der Schlitz samt Schirm und Hohlraum sich über eine möglichst große Länge erstreckt, ohne dass die aus dem Schlitz austretende Lichtstärke wesentlich abnimmt. Sie bleibt also im Wesentlichen konstant. Nahe beim Sender ist die Steigung des Schirms sehr gering, also der Verlauf des Schirms fast parallel zum Schlitz, so dass nur wenig Anteil des Lichtstroms vom Schirm gestreut werden kann. Bei einem größeren Abstand nimmt die Steigung zwar zu, aber der Lichtstrom wird entfernungsbedingt schwächer. Erfindungsgemäß ist die Zunahme der Steigung derart abgestimmt auf die Entfernung, dass die Lichtstärke im Wesentlichen konstant ist.

Bei einer vorteilhaften Ausgestaltung weist das Mobilteil eine Steuerung auf, welche den Traktionsantrieb des Mobilteils derart ansteuert, dass das Mobilteil entlang einer Bahn bewegbar ist, welche zumindest abschnittsweise parallel zum Schlitz verläuft. Von Vorteil ist dabei, dass im Bereich des Aufnahmeteils, Daten vom stationären Anlagenteil zum Mobilteils übertragbar oder austauschbar sind.

Bei einer vorteilhaften Ausgestaltung ist der Schlitz an der Unterseite des Aufnahmeteils angeordnet. Von Vorteil ist dabei, dass Wasser und andere Flüssigkeiten abfließen und eine Reinigung verbessert ausführbar ist

Bei einer vorteilhaften Ausgestaltung ist der Schlitz mit einer transparenten Platte, insbesondere aus Glas oder Kunststoff, abgedeckt. Von Vorteil ist dabei, keine Verschmutzung ferngehalten ist.

Bei einer vorteilhaften Ausgestaltung ist der Schirm aus einem Flies oder aus einem Papier gefertigt. Von Vorteil ist dabei, dass der Schirm kostengünstig herstellbar ist und eine Streuung effektiv ermöglicht.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

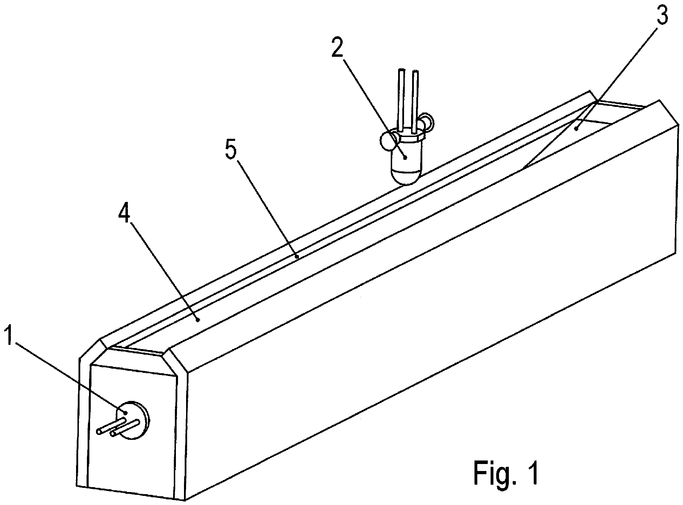

In der Figur 1 ist eine Schrägansicht eines erfindungsgemäßen Systems dargestellt.

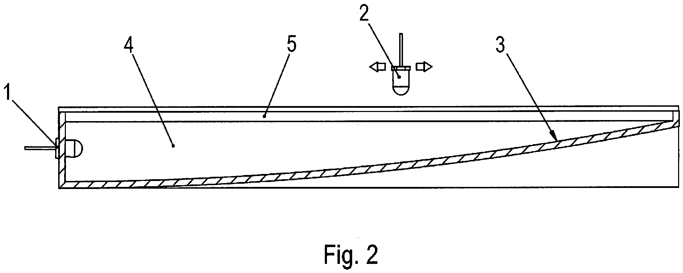

In der Figur 2 ist ein Längsschnitt durch das System dargestellt.

In der Figur 3 ist ein Querschnitt durch das System dargestellt.

Wie in den Figuren gezeigt, ist ein stationär angeordneter Sender 1 an einem Aufnahmeteil befestigt, in welchem ein gebogen verlaufender Schirm 3 angeordnet ist.

Dabei ragt der Sender 1 durch eine Wand des Aufnahmeteils hindurch und strahlt sichtbares oder Infrarot-Licht in einen Hohlraum des Aufnahmeteils ein.

Der Hohlraum ist zur Umgebung hin offen ausgeführt, wobei die Öffnung schlitzförmig ist. Dabei erstreckt sich der schlitz in Bewegungsrichtung, insbesondere Schienenrichtung, eines Mobilteils, insbesondere Schienenfahrzeugs.

Das Aufnahmeteil ist vorzugsweise an einer Schiene des Systems, insbesondere einer Schienenanlage, befestigt. Vorzugsweise ist das Aufnahmeteil an der Schiene integriert.

Alternativ ist das Aufnahmeteil auch in einem Raumbereich einer Anlage anordenbar, in welchem eine Datenübertragung ans Mobilteil erfolgen soll, wobei das Mobilteil entlang einer vorgesehenen Bahn bewegt werden soll, insbesondere beispielsweise entlang einer Spurführungsantenne, welche entlang der vorgesehenen Bahn verlegt ist.

Somit ist ein Empfänger 2, welcher am Mobilteil befestigt ist, in der Lage, Daten zu empfangen, welche mittels des Senders 1 auf das abgestrahlte Licht aufmoduliert sind. Somit sind in diesem Bereich Befehle, wie Fahraufträge für intralogistische Anwendungen, übertragbar.

Vorzugsweise ist die Öffnung in Gravitationsrichtung nach unten ausgerichtet, so dass Wasser aus dem Hohlraum abfließen kann.

Das Aufnahmeteil erstreckt sich in Bewegungsrichtung, insbesondere Schienenrichtung, länger als in jeder Querrichtung hierzu.

Vorzugsweise weist das Aufnahmeteil eine Nut auf, deren Boden durch den Schirm 3 gebildet ist, welcher derart gebogen ausgeführt ist, dass - ausgehend von dem Sender 1 - der Abstand zur Öffnung in Bewegungsrichtung monoton, insbesondere streng monoton, abnimmt. Die Nuttiefe der Nut nimmt also in Bewegungsrichtung entsprechend ab.

Die Seitenflächen (4, 5) sind vorzugsweise mit einer das vom Sender 1 ausgesendete Licht reflektierenden oder streuenden Schicht beschichtet. Somit wird vom Aufnahmeteil möglichst wenig Licht absorbiert.

Die Nutbreite, also die Breite des Hohlraums in Querrichtung zur Bewegungsrichtung, nimmt zur Öffnung hin, insbesondere zum Schlitz hin, ab mit abnehmendem Abstand zur Öffnung.

Statt als Nut in einem Vollkörper ist das Aufnahmeteil auch aus einem Profilteil, wie Ziehprofil oder Stranggussprofilteil, herstellbar, welches einen in Bewegungsrichtung invarianten Querschnitt aufweist, wobei der gebogene Schirm 3 in den Hohlraum eingelegt wird.

Die Öffnung ist quer zur Bewegungsrichtung schmäler ausgeführt als der restliche Hohlraum. Somit ist die Berandung der Öffnung kaminartig verengt.

Die größte Nuttiefe, also der größte Abstand zwischen dem Schirm 3 und der Öffnung, ist bei der Wand, also beim Sender 1 ausgebildet.

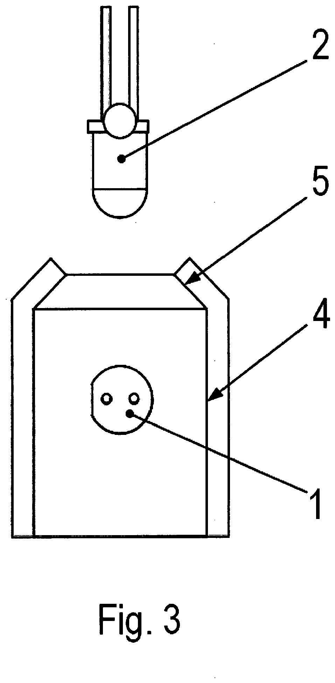

Das Mobilteil wird derart relativ zum Aufnahmeteil bewegt, dass der Empfänger 2 mittig vor der Öffnung geführt wird. Wie in Figur 3 dargestellt, wird der Empfänger 2 weniger weit entfernt von der Öffnung gehalten als deren Breite in Querrichtung zur Bewegungsrichtung beträgt.

Der Schirm 3 ist vorzugsweise derart ausgeführt, dass auftreffendes Licht in alle möglichen Streurichtungen insbesondere möglichst gleichmäßig gestreut wird. Die seitlich an beiden

Seiten des Schirms 3 angebrachten Wandflächen sind mit einer reflektierenden Schicht ausgeführt. Somit ist eine möglichst gleichmäßige Lichtstärke entlang der Öffnung in Bewegungsrichtung erreichbar.

Wenn der Schirm dem Abschnitt einer Ellipse entsprechend gebogen ausgeführt ist, ist eine besonders gleichmäßige Lichtstärke vom Empfänger 2 beim Bewegen entlang der Öffnung detektierbar.

Während der Bewegung des Empfängers 2 entlang der Öffnung, insbesondere in Bewegungsrichtung, sind Daten empfangbar.

Der Sender 1 ist vorzugsweise als LED oder Laserdiode ausgeführt, also als Licht oder Infrarotlicht aussendende Lichtquelle. Der Empfänger 2 ist vorzugsweise als Photodiode oder Phototransistor ausgeführt, welche oder welcher für das Licht des Senders 1 empfindlich ist.

Bei weiteren erfindungsgemäßen Ausführungsbeispielen wird neben dem Sender 1 in einer durch die selbe Wand durchgehenden Ausnehmung ein weiterer Empfänger vorgesehen und am Mobilteil ein weiterer Sender 1. Auf diese Weise sind Daten im Halbduplex-Verfahren übertragbar, wenn alle Sender (1) sowie Empfänger (2) mit demselben Licht arbeiten. Wenn jedoch der Sender 1 und der weitere Sender verschiedene Farben oder Frequenzen verwenden, ist auch eine Vollduplex-Datenübertragung ausführbar.

Bei weiteren erfindungsgemäßen Ausführungsbeispielen wird die Öffnung mit einer für das Licht transparenten Scheibe verschlossen und somit Verschmutzungsgefahr reduziert.

### Bezugszeichenliste

1 Sender
2 Empfänger
3 Schirm
4 Seitenfläche
5 Seitenfläche, insbesondere Kamininnenseite

## Patentansprüche

1. System, insbesondere Anlage, mit einem Mobilteil und einem einen Schirm (3) aufnehmenden Aufnahmeteil, an welchem ein Sender (1) befestigt ist, eingerichtet, um abgestrahltes Licht zu erzeugen und entlang des Schirm aufnehmenden Aufnahmeteils abzustrahlen, wobei
**das Mobilteil einen Traktionsantrieb aufweist und eine Steuerung,**
wobei das Aufnahmeteil einen Schlitz aufweist,
wobei das Mobilteil einen Empfänger (2) aufweist,
**wobei das Mobilteil dem Schlitz entlang bewegbar ist, so dass der Empfänger (2) während der Bewegung einen konstanten Abstand zum Schlitz aufweist,**
**dadurch gekennzeichnet, dass**
**der Schirm (3)** das vom Sender (1) abgestrahlte Licht streut, und **derart gebogen ausgeführt ist, dass der Abstand zwischen dem Schirm (3) und dem Schlitz mit zunehmendem Abstand vom Sender (1) monoton, insbesondere streng monoton, abnimmt,**
**wobei der Schirm (3) in einem Hohlraum des Aufnahmeteils aufgenommen ist, wobei der Hohlraum am Schlitz in die Umgebung mündet,**
**wobei die Steuerung den Traktionsantrieb des Mobilteils derart ansteuert, dass das Mobilteil entlang einer Bahn bewegbar ist, welche abschnittsweise parallel zum Schlitz verläuft.**

2. System nach Anspruch 1,
**dadurch gekennzeichnet, dass**
der Sender (1) gemäß einem digitalen Datenstrom moduliertes Licht, insbesondere sichtbares Licht oder Infrarot-Licht, abstrahlt.

3. System nach Anspruch 2,
**dadurch gekennzeichnet, dass**
der Empfänger (2) aus dem modulierten Licht den Datenstrom demoduliert.

4. System nach einem der vorangegangenen Ansprüche,
**dadurch gekennzeichnet, dass**
den Hohlraum berandende Flächen des Aufnahmeteils als Spiegelflächen ausgeführt sind, insbesondere mit einer Beschichtung versehen sind, die einen Reflexionsgrad von mehr als 60% aufweisen.

5. System nach einem der vorangegangenen Ansprüche,
**dadurch gekennzeichnet, dass**
insbesondere quer zur Erstreckungsrichtung des Schlitzes, die Breite des Schlitzes kleiner ist als die lichte Weite des Hohlraums.

6. System nach einem der vorangegangenen Ansprüche,
**dadurch gekennzeichnet, dass**
der Schlitz an der Unterseite des Aufnahmeteils angeordnet ist.

7. System nach einem der vorangegangenen Ansprüche,
**dadurch gekennzeichnet, dass**
der Schlitz mit einer transparenten Platte, insbesondere aus Glas oder Kunststoff, abgedeckt ist.

8. System nach einem der vorangegangenen Ansprüche,
**dadurch gekennzeichnet, dass**
der Schirm (3) aus einem Flies oder aus einem Papier gefertigt ist.

## Claims

1. System, in particular facility, comprising a mobile component and a receiving component which receives a screen (3) and to which a transmitter (1) is fastened, configured for generating radiated light and for radiating said light along the receiving component that receives the screen,
the mobile component having a traction drive and a controller,
the receiving component having a slot,
the mobile component having a receiver (2),
the mobile component being movable along the slot such that the receiver (2) is at a constant distance from the slot during the movement,
**characterised in that**
the screen (3) disperses light radiated by the transmitter (1) and is configured in a curved manner such that the distance between the screen (3) and the slot decreases monotonically, in particular strictly monotonically, as the distance from the transmitter (1) increases,
the screen (3) being received in a cavity of the receiving component,
the cavity opening into the surroundings at the slot,
the controller actuating the traction drive of the mobile component such that the mobile component is movable along a path that runs in parallel with the slot in some portions.

2. System according to claim 1,
**characterised in that**
the transmitter (1) radiates light, in particular visible light or infrared light, that is modulated in accordance with a digital data stream.

3. System according to claim 2,
**characterised in that**
the receiver (2) demodulates the data stream from the modulated light.

4. System according to any of the preceding claims,
**characterised in that**
the receiving-component surfaces bordering the cavity are configured as reflective surfaces, in particular are provided with a coating that has a reflection factor of more than 60%.

5. System according to any of the preceding claims,
**characterised in that**
the width of the slot is smaller than the clear width of the cavity, in particular transversely to the extension direction of the slot.

6. System according to any of the preceding claims,
**characterised in that**
the slot is arranged on the underside of the receiving component.

7. System according to any of the preceding claims,
**characterised in that**
the slot is covered with a transparent sheet, in particular made of glass or plastics material.

8. System according to any of the preceding claims,
**characterised in that**
the screen (3) is made of a nonwoven fabric or a paper.

## Revendications

1. Système, en particulier installation, comprenant un partie mobile et une partie d'accueil accueillant un écran (3) et à laquelle est fixé un dispositif émetteur (1), conçu pour produire de la lumière rayonnée et la rayonner le long de la partie d'accueil accueillant l'écran,
dans lequel la partie mobile présente un entraînement de traction et un dispositif de commande,
dans lequel la partie d'accueil présente une fente,
dans lequel la partie mobile présente un dispositif récepteur (2),
dans lequel la partie mobile peut être déplacée le long de la fente de sorte que le dispositif récepteur (2) présente une distance constante par rapport à la fente pendant le déplacement, **caractérisé en ce que**
l'écran (3) diffuse la lumière rayonnée à partir du dispositif émetteur (1) et est courbé de telle manière que la distance entre l'écran (3) et la fente diminue de manière monotone, en particulier de manière strictement monotone, à mesure que la distance par rapport au dispositif émetteur (1) augmente,
dans lequel l'écran (3) est accueilli dans une cavité de la partie d'accueil, dans lequel la cavité débouche dans l'environnement au niveau de la fente,
dans lequel le dispositif de commande commande l'entraînement de traction de la partie mobile de telle manière que la partie mobile est mobile le long d'une trajectoire qui s'étend par sections parallèlement à la fente.

2. Système selon la revendication 1,
**caractérisé en ce que**
le dispositif émetteur (1) rayonne de la lumière modulée, en particulier de la lumière visible ou de la lumière infrarouge, en fonction d'un flux de données numériques.

3. Système selon la revendication 2,
**caractérisé en ce que**
le dispositif récepteur (2) démodule le flux de données à partir de la lumière modulée.

4. Système selon l'une quelconque des revendications précédentes,
**caractérisé en ce que**
les surfaces de la partie réceptrice qui bordent la cavité sont réalisées sous la forme de surfaces réfléchissantes, en particulier sont munies d'un revêtement présentant une réflectivité supérieure à 60 %.

5. Système selon l'une quelconque des revendications précédentes,
**caractérisé en ce que**
la largeur de la fente est inférieure à la largeur intérieure de la cavité, en particulier transversalement par rapport à la direction d'extension de la fente.

6. Système selon l'une quelconque des revendications précédentes,
**caractérisé en ce que**
la fente est agencée sur la face inférieure de la partie d'accueil.

7. Système selon l'une quelconque des revendications précédentes,
**caractérisé en ce que**
la fente est recouverte d'une plaque transparente, en particulier en verre ou en plastique.

8. Système selon l'une quelconque des revendications précédentes,
**caractérisé en ce que**
l'écran (3) est fabriqué à partir d'un non-tissé ou d'un papier.
